(19) Europäisches Patentamt / European Patent Office / Office européen des brevets

(11) **EP 4 769 510 A1**

(12) **EUROPEAN PATENT APPLICATION**
published in accordance with Art. 153(4) EPC

(43) Date of publication:
**01.07.2026 Bulletin 2026/27**

(21) Application number: **24908199.3**

(22) Date of filing: **20.12.2024**

(51) International Patent Classification (IPC):
*H01M 4/13* (2010.01)    *H01M 4/66* (2006.01)
*H01M 10/052* (2010.01)    *H01M 4/139* (2010.01)

(52) Cooperative Patent Classification (CPC):
H01M 4/13; H01M 4/139; H01M 4/66;
H01M 10/052; Y02E 60/10

(86) International application number:
**PCT/KR2024/020897**

(87) International publication number:
**WO 2025/135917 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 KR 20230189907**
            **22.12.2023 KR 20230189908**

(71) Applicant: **LG ENERGY SOLUTION, LTD.**
**Seoul 07335 (KR)**

(72) Inventors:
• **LEE, Ho Chan**
  **Yuseong-gu Daejeon 34122 (KR)**
• **LEE, Ki Seok**
  **Yuseong-gu Daejeon 34122 (KR)**
• **SHIN, Dong Mok**
  **Yuseong-gu Daejeon 34122 (KR)**
• **LEE, Nam Jeong**
  **Yuseong-gu Daejeon 34122 (KR)**
• **PAENG, Ki Hoon**
  **Yuseong-gu Daejeon 34122 (KR)**

(74) Representative: **Plasseraud IP**
**104 Rue de Richelieu**
**CS92104**
**75080 Paris Cedex 02 (FR)**

(54) **DRY ELECTRODE, MANUFACTURING METHOD THEREFOR, AND LITHIUM SECONDARY BATTERY COMPRISING SAME**

(57)    The present invention relates to a dry electrode including a current collector; and an electrode material mixture film disposed on the current collector, wherein the electrode material mixture film includes an electrode active material and a fibrillizable binder, wherein a ratio $(I_B/I_A)$ of a $C_3H_7^+$ peak intensity $(I_B)$ to a $C_2H_3O^+$ peak intensity $(I_A)$, which is measured on a surface of the current collector by Time-of-Flight secondary ion mass spectrometry (ToF-SIMS), is 1.3 or less, and a ratio of a carbon content at an interface of the current collector to a carbon content in the electrode material mixture film, which is measured by scanning electron microscope-energy dispersive X-ray spectroscopy, is 1.03 or less.

[FIG. 1]

**Description**

**TECHNICAL FIELD**

Cross-reference to Related Applications

This application claims priority from Korean Patent Application Nos. 10-2023-0189907, filed on December 22, 2023, and 10-2023-0189908, filed on December 22, 2023, the disclosures of which are incorporated by reference herein.

Technical Field

The present invention relates to a dry electrode, a method of preparing the same, and a lithium secondary battery including the same.

**BACKGROUND ART**

Secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup which store surplus generated power or renewable energy.

Typically, a secondary battery is prepared by a method in which, after an electrode active material layer is formed by coating a positive electrode current collector and a negative electrode current collector with an electrode active material slurry, a positive electrode and a negative electrode are prepared through drying and rolling processes, an electrode assembly having a predetermined shape is formed by stacking the positive electrode and the negative electrode on both sides of a separator and is then accommodated in a battery case, and the battery case is sealed after an electrolyte is injected.

During the process of drying the electrode active material slurry, defects, such as pinholes or cracks, may occur in the electrode active material layer formed on the current collector as a solvent contained in the slurry evaporates. Also, since the inside and outside of the electrode active material slurry are not uniformly dried during the drying process, there is a concern that quality of the electrode is degraded due to a powder floating phenomenon caused by a difference in evaporation rate of the solvent, in which particles in a region dried first move upward to form a gap with a region dried relatively later.

To solve the above problem, drying devices capable of controlling the evaporation rate of the solvent are being considered so that the inside and outside of the electrode active material slurry may be uniformly dried, but since these drying devices are very expensive and require considerable cost and time to operate, they have disadvantages in terms of manufacturability.

On the other hand, the solvent contained in the conventional electrode active material slurry is N-methyl-2-pyrrolidone (NMP), wherein, since it has a high boiling point, high thermal energy and a very long drying furnace are required to dry it, and thus, it is very disadvantageous for mass production. Also, since the N-methyl-2-pyrrolidone (NMP) is a toxic substance and harmful to living organisms, it has a disadvantage of not being environmentally friendly.

Accordingly, research on a dry electrode, in which an electrode is prepared without using a solvent, has been actively conducted recently. The dry electrode is generally prepared by laminating a free-standing type electrode material mixture film, which includes an electrode active material, a binder, or a conductive agent and is prepared in a form of a sheet, on a current collector. The electrode material mixture film is prepared by a process in which, first, an electrode active material, a carbon material as a conductive agent, and a fibrillizable binder are mixed together using a blender or the like, the binder is fibrillized by applying a shear force through a process such as jet-milling or kneading, and a free-standing film is then prepared by calendering the obtained mixture into a film shape.

Conventionally, the dry electrode is prepared by forming a conductive primer layer on the current collector to prevent delamination between the electrode material mixture film and the current collector, and then laminating the electrode material mixture film. However, in a case in which the conductive primer layer is formed, since a thickness of the electrode is increased, there are problems in that energy density of the battery is reduced and processability is reduced. In a case in which the current collector and the electrode material mixture film are laminated without the conductive primer layer to solve these problems, since adhesion is decreased, a problem occurs in which the electrode material mixture film is delaminated.

Thus, in order to prevent degradation of battery performance due to the delamination between the current collector and the electrode material mixture film without the conductive primer layer, there is a need for a dry electrode in which interfacial resistance between the current collector and the electrode material mixture film is low while the delamination between the current collector and the electrode material mixture film does not occur.

## DISCLOSURE OF THE INVENTION

### TECHNICAL PROBLEM

An aspect of the present invention provides a dry electrode having excellent adhesion between a current collector and an electrode material mixture film without a conductive primer layer and low interfacial resistance, a method of preparing the same, and a lithium secondary battery including the same.

### TECHNICAL SOLUTION

[1] According to an embodiment of the present invention, provided is a dry electrode including a current collector; and an electrode material mixture film disposed on the current collector, wherein the electrode material mixture film includes an electrode active material and a fibrillizable binder, wherein a ratio ($I_B/I_A$) of a $C_3H_7^+$ peak intensity ($I_B$) to a $C_2H_3O^+$ peak intensity ($I_A$), which is measured on a surface of the current collector by Time-of-Flight secondary ion mass spectrometry (ToF-SIMS), is 1.3 or less, and a ratio of a carbon content at an interface of the current collector to a carbon content in the electrode material mixture film, which is measured by scanning electron microscope-energy dispersive X-ray spectroscopy, is 1.03 or less.

[2] The dry electrode of [1] above, wherein a ratio ($I_B/I_T$) of the $C_3H_7^+$ peak intensity ($I_B$) to total ion counts ($I_T$), which is measured on the surface of the current collector by Time-of-Flight secondary ion mass spectrometry (ToF-SIMS), may be $230 \times 10^{-5}$ or less.

[3] The dry electrode of [1] and/or [2] above, wherein a ratio ($I_A/I_T$) of the $C_2H_3O^+$ peak intensity ($I_A$) to total ion counts ($I_T$), which is measured on the surface of the current collector by Time-of-Flight secondary ion mass spectrometry (ToF-SIMS), may be $1,000 \times 10^{-5}$ or less.

[4] The dry electrode of any one or more of [1] to [3] above, wherein the current collector may include aluminum.

[5] The dry electrode of any one or more of [1] to [4] above, wherein tensile strength of the current collector may be 5 kgf/mm$^2$ or more.

[6] The dry electrode of any one or more of [1] to [5] above, wherein a water contact angle of the surface of the current collector may be in a range of 10° to 100°.

[7] The dry electrode of any one or more of [1] to [6] above, wherein the surface of the current collector may include rolling oil.

[8] According to an embodiment of the present invention, provided is a method of preparing a dry electrode which includes: performing an atmospheric-pressure plasma treatment on a surface of a current collector, wherein loading speed of the current collector in the atmospheric-pressure plasma treatment is in a range of 1 m/min to 100 m/min.

[9] The method of [8] above, wherein, in the atmospheric-pressure plasma treatment, an injection flow of inert gas may be in a range of 500 L/min to 1,000 L/min, and an injection flow of oxygen-containing gas may be in a range of 0.1 L/min to 10 L/min.

[10] The method of [8] and/or [9] above, wherein a ratio of an injection flow of inert gas to an injection flow of oxygen-containing gas in the atmospheric-pressure plasma treatment may be in a range of 50 to 10,000.

[11] The method of any one or more of [8] to [10] above, wherein voltage of the atmospheric-pressure plasma treatment may be in a range of 10 kV to 20 kV.

[12] The method of any one or more of [8] to [11] above, wherein power of the atmospheric-pressure plasma treatment may be in a range of 3 kW to 5 kW.

[13] The method of any one or more of [8] to [12] above, wherein the atmospheric-pressure plasma treatment may be performed in a state in which the current collector and a plasma nozzle are spaced apart from each other by 0.01 mm to 3.00 mm.

[14] According to an embodiment of the present invention, provided is a lithium secondary battery including at least one dry electrode of [1] to [7] above.

### ADVANTAGEOUS EFFECTS

A dry electrode according to the present invention is characterized by low interfacial resistance and excellent energy density as well as excellent adhesion between a current collector and an electrode material mixture film. Thus, the dry electrode according to the present invention may prevent delamination between the current collector and the electrode material mixture film while having low interfacial resistance and excellent energy density of the electrode, and may improve resistance characteristics, rapid charging/discharging characteristics, and life characteristics of a battery.

**BRIEF DESCRIPTION OF THE DRAWINGS**

The accompanying drawings illustrate preferred embodiments of the present invention, and together with the detailed description, serve to provide an explanation of the principle of the present invention, but not intended to limit the scope of the present invention thereto. On the other hand, the shape, size, scale or proportion of elements in the drawings as stated herein may be exaggerated for clarity.

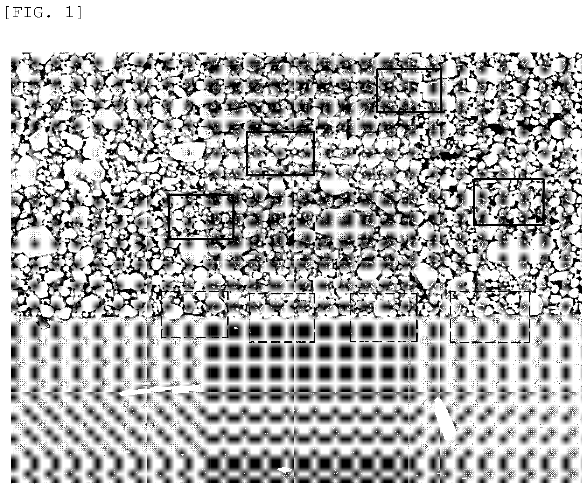

FIG. 1 is a drawing illustrating a region mapped when measuring a ratio of a carbon content at an interface of the current collector to a carbon content in the electrode material mixture film by scanning electron microscope-energy dispersive X-ray spectroscopy.

**MODE FOR CARRYING OUT THE INVENTION**

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, a MD direction (Machine Direction) means a longitudinal direction of a current collector or electrode material mixture film, and a TD direction (Transverse Direction) means a width direction of the current collector or electrode material mixture film.

In this specification, a "material mixture composition" means a mixture including an electrode active material as well as a binder and optionally a conductive agent, which is physically mixed to form a uniform dispersion phase, wherein it may be a mixture of powders, as a product of a mixing process according to this specification, and may be one in which substantially no solvent is involved. Herein, the fact that substantially no solvent is involved means that no solvent or only a trace amount of solvent is added when mixing the material mixture composition.

In this specification, a "mixed aggregate" refers to one in which the mixture of powders is converted into a doughlike aggregate by being bonded or connected to each other while the binder is fibrillized by applying a shear force to the material mixture composition, wherein it, as a product of a kneading process according to this specification, may have a solid content substantially close to 100% and may include a small amount of solvent in some cases.

In this specification, "powder for an electrode" is a material in a state in which the mixed aggregate is ground to form powder by reducing a size of particles, wherein it may mean an electrode material in a form of powder which includes the electrode active material as well as the binder and optionally the conductive agent.

In this specification, the "electrode material mixture film" may be one which is prepared in a form of a free standing type single sheet using an "electrode material mixture" including the electrode active material, the conductive agent, and the binder without a solvent involved, or may mean an electrode material mixture layer in a state of being laminated on the current collector. The expression 'free standing type' in this specification means that it may maintain its form independently without relying on other members and may be moved or handled on its own. The electrode material mixture film may be formed by pressing the powder for an electrode as described later. For example, the powder for an electrode may be integrated by pressing to form a layered structure.

In this specification, a "powder-sheeting film" means a film after a sheet form is formed through a powder-sheeting process in which the powder for an electrode first passes through a rolling roll in a roll-to-roll process (e.g., calendering process) and before passing through a last rolling roll in the roll-to-roll process, wherein it may be a free standing type sheet, but may be a sheet with relatively weak self-supporting ability. Herein, the 'powder-sheeting' means that the powder for an electrode is formed into the form of a free standing type sheet by the rolling roll of the roll-to-roll process, and 'sheeting' is a process performed in a process of preparing the electrode material mixture film from the powder-sheeting film, wherein it may mean a process of roll pressing the powder-sheeting film.

In this specification, a "volume cumulative average particle diameter $D_{50}$" means a particle diameter at a cumulative volume of 50% in a particle size distribution curve of particles. The $D_{50}$, for example, may be measured by using a laser diffraction method. The laser diffraction method may generally measure a particle diameter ranging from a submicron level to a few mm and may obtain highly repeatable and highresolution results.

In this specification, an "average particle diameter" means an arithmetic mean value of particle diameters which is calculated after measuring the particle diameters of at least 30 particles observed in a scanning electron microscope image when observed by using a scanning electron microscope with a field of view of 5,000 times to 20,000 times. In this case, the particle diameter refers to a diameter of the longest axis of the particle. Although measurement methods of the "volume cumulative average particle diameter $D_{50}$" and the "average particle diameter" are different, their values may be derived similarly, and the volume cumulative average particle diameter $D_{50}$ measured in a powder state may have a similar value within an error range to the average particle diameter observed in the scanning electron microscope image of an electrode after the powder is prepared into the electrode.

In this specification, porosity may be calculated by Equation A below.

Porosity (%) = {1-(electrode density/true density)} x 100         [Equation A]

In Equation A, the true density is calculated density derived from density and mass ratio of each component material constituting the powder-sheeting film or electrode material mixture film, assuming that no pores are included, and the electrode density is measured density of the powder-sheeting film or electrode material mixture film which is measured by sampling the powder-sheeting film or electrode material mixture film of a predetermined size.

As a result of continuous research conducted to achieve low interfacial resistance and excellent adhesion between a current collector and an electrode material mixture film without a conductive primer layer, the present inventors have found that, in a case in which a ratio ($I_B/I_A$) of a $C_3H_7^+$ peak intensity ($I_B$) to a $C_2H_3O^+$ peak intensity ($I_A$), which is measured on a surface of the current collector by Time-of-Flight secondary ion mass spectrometry (ToF-SIMS) and a ratio of a carbon content at an interface of the current collector to a carbon content in the electrode material mixture film, which is measured by scanning electron microscope-energy dispersive X-ray spectroscopy, satisfy certain conditions, energy density may be excellent while the adhesion and the interfacial resistance are improved, thereby leading to the completion of the present invention.

Dry Electrode

A dry electrode according to the present invention includes: a current collector; and an electrode material mixture film disposed on the current collector, wherein the electrode material mixture film includes an electrode active material and a fibrillizable binder, wherein a ratio ($I_B/I_A$) of a $C_3H_7^+$ peak intensity ($I_B$) to a $C_2H_3O^+$ peak intensity ($I_A$), which is measured on a surface of the current collector by Time-of-Flight secondary ion mass spectrometry (ToF-SIMS), is 1.3 or less, and a ratio of a carbon content at an interface of the current collector to a carbon content in the electrode material mixture film, which is measured by scanning electron microscope-energy dispersive X-ray spectroscopy, is 1.03 or less.

Conventionally, a dry electrode is prepared by forming a conductive primer layer on a current collector to prevent delamination between an electrode material mixture film and the current collector, and then laminating the electrode material mixture film. In this case, since the current collector is typically a high-strength foil with a micrometerlevel thickness, a large amount of rolling oil may remain on the current collector in order to prepare the current collector.

However, in a case in which the large amount of the rolling oil remains on the current collector, a problem of delamination between the current collector and the electrode material mixture film may occur due to the remaining rolling oil.

In a case in which a conductive primer layer is formed on the current collector to prevent a delamination phenomenon between the current collector and the electrode material mixture film, a thickness of the electrode is increased to reduce energy density of a battery, and since a binder contained in a large amount in the conductive primer layer is wetted and swells due to an electrolyte solution to disconnect a conductive network, there is a problem in that resistance of the battery may increase rapidly. Also, a problem may occur in which the binder in the conductive primer layer may be oxidized or degraded at high potential to increase the resistance of the battery, and there is a problem in that processability may be reduced due to additional costs and additional processes for forming the conductive primer layer.

To prevent these problems, in a case in which a dry electrode is prepared by laminating only the current collector and the electrode material mixture film without a conductive primer layer, there is an advantage of increasing energy density as a thickness of the electrode is decreased because the conductive primer layer is not formed, but since delamination occurs due to low adhesion between the current collector and the electrode material mixture film, a battery does not operate, or problems occur in which resistance characteristics, rapid charging/discharging characteristics, and life characteristics of the battery are degraded.

Accordingly, in order to achieve excellent electrochemical characteristics of the battery by improving the adhesion between the current collector and the electrode material mixture film without a conductive primer layer, the present invention aims to change a composition of the rolling oil remaining on the current collector by performing a plasma treatment satisfying specific conditions on the current collector.

According to an embodiment of the present invention, a ratio ($I_B/I_A$) of a $C_3H_7^+$ peak intensity ($I_B$) to a $C_2H_3O^+$ peak intensity ($I_A$), which is measured on a surface of the current collector by Time-of-Flight secondary ion mass spectrometry (ToF-SIMS), may be 1.3 or less.

The measured $C_2H_3O^+$ peak intensity ($I_A$) may be a factor indicating an amount of CHO-based organic substances present on the current collector, and the measured $C_3H_7^+$ peak intensity ($I_B$) may be a factor indicating an amount of CH-based organic substances present on the current collector. In this case, the CHO-based organic substances are hydrophilic materials, wherein the higher the amount is, the better the adhesion may be, but they may act as a factor that maximizes interfacial resistance. Also, the CH-based organic substances are hydrophobic materials, wherein the higher the amount is, the lower the adhesion may be. Thus, the ratio ($I_B/I_A$) of the $C_3H_7^+$ peak intensity ($I_B$) to the $C_2H_3O^+$ peak intensity ($I_A$) must be controlled within an appropriate range to achieve low resistance as well as excellent coatability and adhesion.

Preferably, the ratio ($I_B/I_A$) of the $C_3H_7^+$ peak intensity ($I_B$) to the $C_2H_3O^+$ peak intensity ($I_A$), which is measured on the surface of the current collector by Time-of-Flight secondary ion mass spectrometry (ToF-SIMS), may be 0.01 or more, 0.02 or more, 0.03 or more, or 0.04 or more, may be 1.3 or less, 1.2 or less, 1.0 or less, 0.9 or less, 0.8 or less, 0.7 or less, 0.6 or less, 0.5 or less, or 0.45 or less, and may more preferably be in a range of 0.25 to 0.45.

In a case in which the ratio ($I_B/I_A$) of the $C_3H_7^+$ peak intensity ($I_B$) to the $C_2H_3O^+$ peak intensity ($I_A$) is greater than 1.3, since the composition of the rolling oil formed on the surface of the current collector is not sufficiently changed, surface energy of the current collector is not increased, and thus, a problem occurs in which the adhesion between the current collector and the electrode material mixture film is reduced. Thus, in a case in which the above range is satisfied, since the adhesion between the current collector and the electrode material mixture film is excellent and the amount of the rolling oil remaining on the current collector may be sufficiently reduced, the resistance characteristics, rapid charging/discharging characteristics, and life characteristics of the battery may be improved.

According to an embodiment of the present invention, the dry electrode may have a ratio of a carbon content at an interface of the current collector to a carbon content in the electrode material mixture film, which is measured by scanning electron microscope-energy dispersive X-ray spectroscopy, of 1.03 or less. One feature of the present invention is that since a conductive primer layer is not included in the electrode, an excellent electrode is achieved by preventing degradation of electrochemical characteristics of the battery due to an excessive amount of the binder included in the conductive primer layer while having excellent energy density. Thus, in a case in which the ratio of the carbon content at the interface of the current collector to the carbon content in the electrode material mixture film, which is measured by scanning electron microscope-energy dispersive X-ray spectroscopy, is greater than 1.03, there is a problem in that the energy density of the electrode is reduced, the resistance may be increased due to the excessive amount of the binder, and the processability is reduced. Preferably, the ratio of the carbon content at the interface of the current collector to the carbon content in the electrode material mixture film, which is measured by scanning electron microscope-energy dispersive X-ray spectroscopy, may be in a range of 0.53 to 1.03.

An intensity of carbon distribution on a cross section of the electrode, which is measured by the scanning electron microscope-energy dispersive X-ray spectroscopy, is not limited as long as it is measured by a measuring device commonly used in the art, but, for example, may be measured using JSM-IT800 (JEOL Ltd.).

In this case, the ratio of the carbon content at the interface of the current collector to the carbon content in the electrode material mixture film, which is measured by scanning electron microscope-energy dispersive X-ray spectroscopy, may be measured under conditions of an accelerating voltage of 5 kV, an incident current (probe current) of 2.3 nA, and a working distance of 10 mm.

The carbon content at the interface of the current collector may be obtained as an average value of carbon contents (wt%) measured by performing mapping in a rectangular shape with a size of 2.0 $\mu$m $\times$ 1.5 $\mu$m centered on the interface of the current collector 10 times, the carbon content in the electrode material mixture film may be obtained as an average value of carbon contents (wt%) measured by performing mapping 10 times such that only the inside of the electrode material mixture film is included in a rectangular shape with a size of 2.0 $\mu$m $\times$ 1.5 $\mu$m, and a total count measured during each mapping may be 35,000 cps.

For example, referring to FIG. 1, mapping in a rectangular shape with a size of 2.0 $\mu$m $\times$ 1.5 $\mu$m centered on the interface of the current collector, like a dotted rectangle, is performed 10 times to measure carbon contents (wt%) and obtain an average value, wherein the average value may be evaluated as the carbon content at the interface of the current collector, and mapping is performed 10 times such that only the inside of the electrode material mixture film is included in a rectangular shape with a size of 2.0 $\mu$m $\times$ 1.5 $\mu$m, like a solid rectangle, to measure carbon contents (wt%) and obtain an average value, wherein the average value may be evaluated as the carbon content in the electrode material mixture film, and thus, the ratio of the evaluated carbon content at the interface of the current collector to the evaluated carbon content in the electrode material mixture film may be derived.

According to an embodiment of the present invention, a ratio ($I_B/I_T$) of the $C_3H_7^+$ peak intensity ($I_B$) to total ion counts ($I_T$), which is measured on the surface of the current collector by Time-of-Flight secondary ion mass spectrometry (ToF-SIMS), may be $230 \times 10^{-5}$ or less, and may preferably be $1 \times 10^{-5}$ or more, $10 \times 10^{-5}$ or more, $20 \times 10^{-5}$ or more, $30 \times 10^{-5}$ or more, $40 \times 10^{-5}$ or more, $50 \times 10^{-5}$ or more, $60 \times 10^{-5}$ or more, $70 \times 10^{-5}$ or more, $72 \times 10^{-5}$ or more, $74 \times 10^{-5}$ or more, or $76 \times 10^{-5}$ or more, may be $200 \times 10^{-5}$ or less, $150 \times 10^{-5}$ or less, $100 \times 10^{-5}$ or less, $90 \times 10^{-5}$ or less, $88 \times 10^{-5}$ or less, $86 \times 10^{-5}$ or less, $84 \times 10^{-5}$ or less, $82 \times 10^{-5}$ or less, or $81 \times 10^{-5}$ or less, and may more preferably be in a range of $76 \times 10^{-5}$ to $81 \times 10^{-5}$. In a case in which the above range is satisfied, since the surface energy of the current collector may be increased due to less organic substance with low reactivity on the current collector, the adhesion between the current collector and the electrode material mixture film may be excellent and excellent resistance characteristics may be achieved while a peeling-off phenomenon of the electrode material mixture film may be prevented.

According to an embodiment of the present invention, a ratio ($I_A/I_T$) of the $C_2H_3O^+$ peak intensity ($I_A$) to the total ion counts ($I_T$), which is measured on the surface of the current collector by Time-of-Flight secondary ion mass spectrometry (ToF-SIMS), may be $1,000\times10^{-5}$ or less, and may preferably be $1\times10^{-5}$ or more, $10\times10^{-5}$ or more, $20\times10^{-5}$ or more, $40\times10^{-5}$ or more, $60\times10^{-5}$ or more, $80\times10^{-5}$ or more, $100\times10^{-5}$ or more, $120\times10^{-5}$ or more, $140\times10^{-5}$ or more, $160\times10^{-5}$ or more, $180\times10^{-5}$ or more, or $184\times10^{-5}$ or more, may be $900\times10^{-5}$ or less, $800\times10^{-5}$ or less, $700\times10^{-5}$ or less, $600\times10^{-5}$ or less, $500\times10^{-5}$ or less, $400\times10^{-5}$ or less, $350\times10^{-5}$ or less, $320\times10^{-5}$ or less, $310\times10^{-5}$ or less, or $309\times10^{-5}$ or less, and may more preferably be in a range of $184\times10^{-5}$ to $309\times10^{-5}$. In a case in which the above range is satisfied, since the surface energy of the current collector may be increased due to less organic substance with low reactivity on the current collector, the adhesion between the current collector and the electrode material mixture film may be excellent and excellent resistance characteristics may be achieved while the peeling-off phenomenon of the electrode material mixture film may be prevented.

According to an embodiment of the present invention, the Time-of-Flight secondary ion mass spectrometry (ToF-SIMS) may be performed using a commonly used device, and may preferably be performed under specific conditions using TOF-SIMS 5 by Ion-TOF GmbH. For example, the Time-of-Flight secondary ion mass spectrometry (ToF-SIMS) may be performed under the following conditions: it is performed in a positive mode, a measurement mass range is 1u to 873u, a type of primary ion (source ion) is $Bi_3$, a primary ion dose is $3.81\times10^8$ ions/cm$^2$, voltage is 30 KeV, detection time is 100 seconds, and FOV (field of view) is 100 $\mu$m$\times$100 um.

Next, the current collector will be described in detail.

In a case in which the dry electrode is a positive electrode, the current collector is not particularly limited so long as it has conductivity without causing chemical changes in the battery. For example, stainless steel, aluminum, nickel, titanium, fired carbon, or aluminum or stainless steel that is surface-treated with one of carbon, nickel, titanium, silver, or the like may be used as the current collector.

In a case in which the dry electrode is a negative electrode, the current collector is not particularly limited so long as it has high conductivity without causing changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

Specifically, the current collector may include aluminum, and may more specifically be aluminum alloy A1100. In a case in which the current collector is formed of aluminum or aluminum alloy A1100, fracturing of the current collector due to a strong plasma treatment may be prevented, and a problem of reduced adhesion due to residual rolling oil may be improved.

According to an embodiment of the present invention, a thickness of the current collector may be in a range of 5 $\mu$m to 30 $\mu$m, preferably 8 $\mu$m to 20 $\mu$m, and more preferably 10 $\mu$m to 15 $\mu$m. In a case in which the above range is satisfied, it is desirable in that a short circuit may be prevented because defects, such as pinholes, do not occur in the current collector, and the energy density may be increased because the thickness is not excessively large. Also, the current collector may have fine surface roughness to improve the adhesion with the electrode material mixture film.

According to an embodiment of the present invention, tensile strength of the current collector may be in a range of 5 kgf/mm$^2$ or more, preferably 6 kgf/mm$^2$ or more, and more preferably 7 kgf/mm$^2$ or more. In a case in which the above range is satisfied, since the current collector has high strength even if the current collector is thin, it is unlikely to fracture and may withstand impact from the strong plasma treatment. Also, with respect to a high-strength and highstiffness current collector, different from a conventional current collector base material, a large amount of the rolling oil may be used to prepare the current collector. Thus, an effect of improving coatability and adhesion due to the plasma treatment may be more excellent.

According to an embodiment of the present invention, a water contact angle of the surface of the current collector may be in a range of 10° to 100°, preferably 10° to 80°, and more preferably 10° to 70°. In a case in which the above range is satisfied, since the surface energy of the current collector may be excellent while process cost and complexity are not excessive, the adhesion between the current collector and the electrode material mixture film may be excellent.

The water contact angle may be measured by a conventional method in the art, and, for example, it may be measured using a tangent angle method by dropping a 3 $\mu\ell$ drop at a speed of 3 $\mu\ell$/s using DSA100 by KRUSS GmbH.

Next, the electrode material mixture film will be described in detail.

According to an embodiment of the present invention, the electrode material mixture film may include an electrode active material and a fibrillizable binder, and the electrode material mixture film may preferably include an electrode active material, a conductive agent, and a fibrillizable binder.

There is no particular limitation on the electrode active material as long as it is a commonly used electrode active material, and, for example, the electrode active material may be a positive electrode active material or a negative electrode active material.

The positive electrode active material is a compound capable of reversibly intercalating and deintercalating lithium, wherein the positive electrode active material may preferably include a lithium metal oxide including lithium and at least one metal such as cobalt, manganese, nickel, or aluminum. More preferably, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-z}Ni_zO_4$ (where $0<Z<2$), etc.), lithium-nickel-cobalt-based oxide (e.g., $LiNi_{1-Y1}Co_{Y1}O_2$ (where $0<Y1<1$), etc.), lithium-manganese-cobalt-based oxide (e.g., $LiCo_{1-Y2}Mn_{Y2}O_2$ (where $0<Y2<1$), $LiMn_{2-z1}Co_{z1}O_4$ (where $0<Z1<2$), etc.), lithium-nickel-manganese-cobalt-based oxide (e.g., $Li(Ni_pCo_qMn_r)O_2$ (where $0<p<1$, $0<q<1$, $0<r<1$, and $p+q+r=1$) or $Li(Ni_{p1}Co_{q1}Mn_{r1})O_4$ (where $0<p1<2$, $0<q1<2$, $0<r1<2$, and $p1+q1+r1=2$), etc.), lithium-nickel-cobalt-transition metal (M) oxide (e.g., $Li(Ni_{p2}Co_{q2}Mn_{r2}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein $0<p2<1$, $0<q2<1$, $0<r2<1$, $0<s2<1$, and $p2+q2+r2+s2=1$), etc.), or lithium iron phosphate (e.g., $Li_{1+a}Fe_{1-x}M_x(PO_{4-b})X_b$ (where M is at least one selected from Al, Mg, and Ti, and X is at least one selected from fluorine (F), sulfur (S), and nitrogen (N), wherein $-0.5\leq a\leq0.5$, $0\leq x\leq0.5$, and $0\leq b\leq0.1$), and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$, etc.), lithium nickel cobalt aluminum oxide (e.g., $Li(Ni_{0.8}Co_{0.15}Al_{0.05})O_2$, etc.), lithium nickel manganese cobalt aluminum oxide (e.g., $Li(Ni_{0.86}Co_{0.05}Mn_{0.07}Al_{0.02})O_2$), or lithium iron phosphate (e.g., $LiFePO_4$), and any one thereof or a mixture of two or more thereof may be used.

For example, the electrode active material may include a phosphate represented by Formula 1 below.

$$[\text{Formula 1}] \qquad Li_{1+x}[Fe_{1-a-b}Mn_aM^1_b]PO_4$$

In Formula 1, $M^1$ is at least one element selected from the group consisting of Al, Mg, nickel (Ni), cobalt (Co), Ti, gallium (Ga), copper (Cu), V, Mo, niobium (Nb), tungsten (W), zirconium (Zr), cerium (Ce), indium (In), zinc (Zn), and yttrium (Y), and $-0.5\leq x\leq0.5$, $0\leq a\leq0.9$, and $0\leq b\leq0.1$. In a case in which the above conditions are satisfied, it may be desirable in terms of being able to achieve excellent economic efficiency and stability.

For example, in terms of being able to prepare an electrode material mixture film in a form of a uniform and stable film, the electrode active material may include lithium nickel cobalt manganese aluminum oxide.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (lowtemperature sintered carbon) or hard carbon, mesophase pitch carbide, and fired cokes.

As the metal or the alloy of lithium and the metal, a metal selected from the group consisting of Cu, Ni, sodium (Na), potassium (K), rubidium (Rb), cesium (Cs), francium (Fr), beryllium (Be), Mg, calcium (Ca), strontium (Sr), silicon (Si), antimony (Sb), lead (Pb), In, Zn, barium (Ba), radium (Ra), germanium (Ge), Al, and tin (Sn) or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0\leq x\leq1$), $Li_xWO_2$ ($0\leq x\leq1$), and $Sn_xMe_{1-x}Me'_yO_z$ (Me: manganese (Mn), Fe, Pb, or Ge; Me': Al, boron (B), phosphorus (P), Si, Groups I, II and III elements of the periodic table, or halogen; $0<x=1$; $1\leq y\leq3$; $1\leq z\leq8$) may be used as the metal composite oxide.

The material, which may be doped and undoped with lithium, may include Si, $SiO_x$ ($0<x\leq2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, scandium (Sc), Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), S, selenium (Se), tellurium (Te), polonium (Po), and a combination thereof.

The transition metal oxide may include lithiumcontaining titanium composite oxide (LTO), vanadium oxide, and lithium vanadium oxide.

Preferably, the electrode active material may include at least one selected from the group consisting of lithium nickel cobalt manganese aluminum oxide and lithium iron phosphate, and may more preferably include lithium nickel cobalt manganese aluminum oxide.

The conductive agent is a component for further improving conductivity of the electrode active material, wherein the conductive agent is not particularly limited as long as it has conductivity without causing chemical changes in the battery, and, for example, a conductive material, such as: carbon powder such as carbon black, acetylene black, Ketjen black, channel black, furnace black, lamp black, or thermal black; graphite powder such as natural graphite with a welldeveloped crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used. Specifically, the conductive agent may include at least one selected from the group consisting of activated carbon, graphite, carbon black, and carbon nanotubes (CNT) for uniform mixing of the conductive agent and improvement of the conductivity.

The fibrillizable binder is not particularly specified as long as it may be fibrillized, and the fibrillization refers to a treatment of finely dividing a polymer. For example, the fibrillization may be performed using a mechanical shear force or the like, and surfaces of the polymer fibers thus fibrillized are loose to generate a large number of fine fibers (fibrils). The fibrillizable binder may preferably include at least one selected from the group consisting of polytetrafluoroethylene (PTFE) and polyolefin, may more preferably polytetrafluoroethylene (PTFE), and may even more preferably be polytetrafluoro-oethylene (PTFE). Preferably, the polytetrafluoroethylene (PTFE) may be included in an amount of 60 wt% or more based on a total weight of the binder. In this case, the binder may additionally include at least one of PEO (polyethylene oxide), PVdF (polyvinylidene fluoride), PVdF-HFP (polyvinylidene fluoride-co - hexafluoropropylene), and a polyolefin-based binder.

A weight ratio of the electrode active material, the conductive agent, and the fibrillizable binder may be 80 wt% to 98 wt% : 0.5 wt% to 10 wt% : 0.5 wt% to 10 wt%, and may preferably be 85 wt% to 98 wt% : 0.5 wt% to 5 wt% : 0.5 wt% to 10 wt%. In a case in which the above range is satisfied, since the amount of the binder may be appropriately included, sufficient fibrillization may be achieved, and thus, the fibrillized binder may be aggregated so as to form powder for an electrode, may be aggregated so as to form an electrode material mixture film, and may improve physical properties of the electrode material mixture film.

In the present invention, the electrode material mixture film may have a porosity of 20% to 50%, specifically 20% to 40%, and more specifically 25% to 35%. In a case in which the above range is satisfied, since electrolyte impregnation is excellent, life characteristics and output characteristics may be improved and the energy density may be excellent.

The dry electrode may include rolling oil on the surface of the current collector. The rolling oil is not particularly limited as long as it may perform functions of lubricating during rolling and removing foreign matter while cooling high-temperature frictional heat generated during the rolling.

The dry electrode may not include a conductive primer layer. Herein, the conductive primer layer may include a conductive material and a binder, wherein the conductive material is not limited as long as it is a material having conductivity, but, for example, may be a carbon-based material. The binder may include a fluorine-based binder (including PVDF and PVDF copolymer), an acrylic-based binder, and an aqueous binder which may be dissolved in a solvent. In a case in which the conductive primer layer is not included, the energy density of the electrode may be increased, and the resistance may be decreased.

## Method of Preparing Dry Electrode

A method of preparing a dry electrode according to the present invention includes a step of performing an atmospheric-pressure plasma treatment on a surface of a current collector, wherein loading speed of the current collector in the atmospheric-pressure plasma treatment is in a range of 1 m/min to 100 m/min.

Hereinafter, the atmospheric-pressure plasma treatment will be described in detail, and since the current collector has been described above, a detailed description of the current collector will be omitted.

(S1) Step of Performing Atmospheric-pressure Plasma Treatment

The method of preparing a dry electrode according to the present invention includes a step of performing an atmospheric-pressure plasma treatment on a surface of a current collector. The above-described specific peak intensity, which is measured on the surface of the current collector by Time-of-Flight secondary ion mass spectrometry (ToF-SIMS), may be achieved by various methods, but may preferably be achieved through the atmospheric-pressure plasma treatment.

Conventionally, a plasma treatment was performed in a vacuum, but, in a case in which the plasma treatment is performed in a vacuum, there is a disadvantage in that a continuous process is not possible because the plasma treatment is performed in a closed space. That is, since a vacuum chamber must be used, there are disadvantages in that process time is increased and the plasma treatment is not suitable for mass production or continuous production, and thus, performing of an effective continuous process through the atmospheric-pressure plasma treatment may have excellent processability.

The loading speed of the current collector in the atmospheric-pressure plasma treatment is in a range of 1 m/min to 100 m/min, may preferably be 2 m/min or more, 3 m/min or more, 4 m/min or more, 5 m/min or more, 6 m/min or more, 7 m/min or more, 8 m/min or more, 9 m/min or more, 10 m/min or more, 11 m/min or more, 12 m/min or more, 13 m/min or more, 14 m/min or more, or 15 m/min or more, and may be 95 m/min or less, 90 m/min or less, 85 m/min or less, 80 m/min or less, 75 m/min or less, 70 m/min or less, 65 m/min or less, or 60 m/min or less. In a case in which the loading speed of the current collector is less than 1 m/min, there are problems in that fracture occurs in the current collector due to an excessive plasma treatment, all the rolling oil disappears due to excessive surface etching, and the processability is reduced due to the low loading speed. In a case in which the loading speed of the current collector is greater than 100 m/min, there is a problem in that a sufficient plasma treatment is not performed due to the high speed and the adhesion is reduced because the composition of the rolling oil is not sufficiently changed. Thus, in a case in which the above range is satisfied, while the fracture of the current collector may be appropriately prevented, the adhesion may be improved by causing a change in the rolling oil through the sufficient plasma treatment.

An injection flow of inert gas in the atmospheric-pressure plasma treatment may be in a range of 650 L/min to 1,000 L/min, preferably 675 L/min to 950 L/min, more preferably 700 L/min to 900 L/min, and even more preferably 725 L/min to 900 L/min.

The atmospheric-pressure plasma treatment may be performed by injecting an oxygen-containing gas. Preferably, the atmospheric-pressure plasma treatment may be performed using the oxygen-containing gas as a plasma-activated gas. In a case in which the above conditions are satisfied, since a plasma treatment may be performed under atmospheric pressure without performing a plasma treatment in a vacuum chamber, the processability may be excellent.

An injection flow of the oxygen-containing gas in the atmospheric-pressure plasma treatment may be in a range of 0.1 L/min to 10 L/min, preferably 0.5 L/min to 6 L/min, and more preferably 1 L/min to 4 L/min. In this case, the oxygen-containing gas may have an oxygen content of 80 wt% or more, and may preferably be dry air free of foreign matter.

A ratio ($F_N/F_O$) of the injection flow ($F_N$) of the inert gas to the injection flow ($F_O$) of the oxygen-containing gas in the atmospheric-pressure plasma treatment may be in a range of 50 to 10,000, preferably 60 to 5,000, and more preferably 90 to 1,000.

Voltage of the atmospheric-pressure plasma treatment may be in a range of 10 kV to 20 kV, preferably 11 kV to 19 kV, and more preferably 12 kV to 18 kV. In a case in which the above range is satisfied, an appropriate level of plasma may be efficiently generated.

Power of the atmospheric-pressure plasma treatment may be in a range of 3 kW to 5 kW, preferably 3.2 kW to 4.8 kW, and more preferably 3.4 kW to 4.6 kW. In a case in which the above range is satisfied, since plasma may be generated with efficient power, the processability may be excellent.

The atmospheric-pressure plasma treatment may be performed in a state in which the current collector and a plasma nozzle are spaced apart from each other by 0.01 mm to 3.00 mm, and may preferably be performed in a state in which the current collector and the plasma nozzle are spaced apart from each other by 0.05 mm to 2.90 mm, more preferably 0.1 mm to 2.5 mm, and even more preferably 0.5 mm to 2.5 mm.

The atmospheric-pressure plasma treatment may be performed 1 to 10 times, preferably 1 to 8 times, more preferably 1 to 6 times, even more preferably 1 to 4 times, and even more preferably 1 to 3 times. In a case in which the above range is satisfied, since a sufficient plasma treatment may be performed on the surface of the current collector, excellent adhesion may be achieved.

The present invention may not include a step of forming a conductive primer layer on the current collector. Since the specific composition of the conductive primer layer has been described above, a description thereof will be omitted.

The method of preparing a dry electrode according to the present invention may further include a step of preparing an electrode by laminating an electrode material mixture film on one side or both sides of the current collector and laminating the resultant product, after the atmospheric-pressure plasma treatment of the surface of the current collector. The lamination may be a step of attaching the electrode material mixture film onto the current collector by rolling. The lamination may be performed by a roll press method using a lamination roller, and, in this case, the lamination roller may be maintained at a temperature of 20°C to 200°C.

Since the specific composition of the electrode material mixture film has been described above, a description thereof will be omitted, and the electrode material mixture film may be prepared by including the steps of: (a) mixing an electrode active material with a fibrillizable binder to obtain a material mixture composition; (b) kneading the material mixture composition to prepare a mixed aggregate; (c) grinding the mixed aggregate to prepare powder for an electrode; and (d) calendering the powder for an electrode.

Hereinafter, each step will be preferably described.

The step (a) of mixing an electrode active material with a fibrillizable binder to obtain a material mixture composition will be described. Preferably, the step (a) may be a step of obtaining a material mixture composition by mixing an electrode active material, a conductive agent, and a fibrillizable binder. Since the specific composition of the electrode active material, the conductive agent, and the fibrillizable binder has been described above, a description thereof will be omitted.

The mixing is performed such that the electrode active material, the fibrillizable binder, and optionally the conductive agent may be uniformly distributed, wherein, since they are mixed in a powder form, they may be mixed by various methods without limitation as long as they may be simply mixed. However, since the electrode in the present invention is prepared as a dry electrode that does not use a solvent, the mixing may be performed as dry mixing and may be performed by adding the above materials to a device such as a mixer or blender.

In this case, the mixing may be performed in a mixer at 500 rpm to 20,000 rpm for 1 minute to 60 minutes, and may preferably be performed at 600 rpm to 1,800 rpm for 2 minutes to 30 minutes, more preferably at 800 rpm to 1,600 rpm for 3 minutes to 20 minutes, and even more preferably at 1,000 rpm to 1,400 rpm for 5 minutes to 15 minutes. In a case in which the mixing is performed within the above range, since the materials may be uniformly mixed, battery performance may be improved.

Next, the step (b) of kneading the material mixture composition to prepare a mixed aggregate will be described. For the material mixture composition obtained in the mixing, a fibrillization process for fibrillizing the fibrillizable binder may be performed, and preferably, a mixed aggregate may be prepared by kneading.

The kneading may be performed at a speed of 50 rpm to 300 rpm, and may preferably be performed at a speed of 70 rpm to 200 rpm. Also, the kneading may be performed by loading the material mixture composition in an amount of 5 kg/h to 40 kg/h, and may preferably be performed by loading the material mixture composition in an amount of 10 kg/h to 30 kg/h. In a case in which the above range is satisfied, since appropriate fibrillization may occur, characteristics of the battery may be improved.

Furthermore, the kneading may be performed at a temperature of 150°C to 250°C, preferably, 160°C to 200°C. In a case in which the kneading is performed at a high temperature within the above range, the fibrillization of the binder and the aggregation due to the kneading may be well achieved, and a problem of disconnection of the fibrillized binder may be appropriately prevented.

Next, the step (c) of grinding the mixed aggregate to prepare powder for an electrode will be described.

The mixed aggregate prepared through the kneading may also be made into an electrode material mixture film by being immediately added into a calendering process, but, in this case, the mixed aggregate must be prepared in a form of a thin film by pressing it at high pressure and high temperature, and accordingly, a problem occurs in which density of the film may be excessively increased or a uniform film may not be obtained. Thus, the mixed aggregate prepared as described above is ground to prepare powder for an electrode.

A grinding machine used for the grinding is not particularly limited, but the grinding may preferably be performed using a device such as a blender or grinder.

The grinding may be performed at a speed of 1,000 rpm to 6,000 rpm and a rate of 5 kg/hr to 200 kg/hr, preferably, at a speed of 1,500 rpm to 4000 rpm and a rate of 10 kg/hr to 150 kg/hr. In a case in which the grinding is performed within the above range, sufficient grinding may be achieved to prepare powder of an appropriate size for film formation, and a large amount of fine powder may not be generated in the mixed aggregate.

An average particle diameter of the powder for an electrode may be in a range of 10 μm to 3,000 μm, specifically 50 μm to 1,500 μm, and more specifically 100 μm to 700 μm. In a case in which the above range is satisfied, a material mixture film having uniform thickness and density may be formed, and excellent physical properties of the material mixture film may be secured.

Although it is not essential, the powder for an electrode according to the present invention may additionally include fillers to suppress expansion of the electrode. The filler is not particularly limited as long as it is a fibrous material that does not cause chemical changes in the battery, but, for example, the filler may include at least one selected from olefin polymers such as polyethylene and polypropylene; and fibrous materials such as glass fibers and carbon fibers.

Next, the step (d) of calendering the powder for an electrode will be described. An electrode material mixture film may be prepared by a calendering method in which the powder for an electrode is supplied to a calendering device and the supplied material is thermocompressed using roll press(es) included in the calendering device.

Preferably, the powder for an electrode according to the present invention may be supplied to a calender roll and hot-pressed to prepare a material mixture film in a form of a sheet. In this case, temperature of the calender roll may be in a range of 50°C to 200°C.

The calender roll includes a roll press unit in which two rollers are arranged to face each other, and a plurality of the roll press units may be arranged continuously. In this case, a rotational speed ratio of the two rollers in each roll press unit may be independently adjusted appropriately within a range of 1:1 to 1:10.

Also, in order to adjust the prepared material mixture film to have an appropriate thickness, the prepared material mixture film may be introduced into the roll press unit again and hot-pressed 1 to 10 times.

**Lithium Secondary Battery**

A lithium secondary battery according to the present invention includes the dry electrode according to the present invention. More specifically, the lithium secondary battery according to the present invention includes a positive electrode, a negative electrode, a separator, and an electrolyte, wherein the positive electrode and/or the negative electrode may be a dry electrode, and preferably, the lithium secondary battery according to the present invention may be a lithium secondary battery including the dry electrode according to the present invention, a negative electrode, a separator, and an electrolyte. In a case in which only one of the positive electrode or the negative electrode is the dry electrode according to the present invention, the other electrode may be an electrode that is prepared through a conventional wet preparation method.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Preferably, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Preferably, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

Also, since the lithium secondary battery according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

Hereinafter, the present invention will be more preferably described, according to specific examples.

**Example 1: Dry Electrode Preparation**

(Preparation of Current Collector)

A current collector (aluminum alloy thin film) with rolling oil present on a surface thereof was plasma-treated at atmospheric pressure to prepare an atmospheric-pressure plasma-treated current collector.

Preferably, the atmospheric-pressure plasma treatment was performed once at an injection flow of inert gas ($N_2$) of 800 LPM, an injection flow of dried oxygen-containing gas of 2 LPM, a voltage of 14 kV, a power of 3.9 kW, and a distance between the current collector and a plasma nozzle of 1.5 mm, while moving the current collector at a speed of 40 m/min.

(Preparation of Electrode Material Mixture Film)

96 g of lithium nickel cobalt manganese aluminum oxide as an electrode active material, 1.5 g of carbon black as a conductive agent, and polytetrafluoroethylene (PTFE), as a binder, were introduced into a blender and mixed at 10,000 rpm for 1 minute to prepare a material mixture composition.

Thereafter, the material mixture composition was put in a kneader and kneaded at a rotational speed of 50 rpm for 5 minutes at a temperature of 150°C and a pressure of 1.1 atm to prepare a mixed aggregate, and the mixed aggregate was introduced into a blender and then ground at 10,000 rpm for 40 seconds to obtain powder for an electrode.

The powder for an electrode was formed into a sheet with a rolling roll in a roll-to-roll process and then rolled using a rolling roll (roll diameter: 200 mm, roll temperature: 100°C, rotational speed: 20 rpm) to prepare an electrode material mixture film.

(Preparation of Dry Electrode)

Thereafter, a dry electrode was prepared by laminating the electrode material mixture film on the atmospheric-pressure plasma-treated current collector through a roll press.

**Example 2: Dry Electrode Preparation**

A dry electrode was prepared in the same manner as in Example 1 except that the atmospheric-pressure plasma treatment was performed twice at an injection flow of inert gas ($N_2$) of 800 LPM, an injection flow of dried oxygen-containing gas of 2 LPM, a voltage of 14 kV, a power of 3.9 kW, and a distance between the current collector and the plasma nozzle of 1.5 mm, while moving the current collector at a speed of 40 m/min.

**Example 3: Dry Electrode Preparation**

A dry electrode was prepared in the same manner as in Example 1 except that the atmospheric-pressure plasma treatment was performed once at an injection flow of inert gas ($N_2$) of 800 LPM, an injection flow of dried oxygen-containing gas of 2 LPM, a voltage of 14 kV, a power of 3.9 kW, and a distance between the current collector and the plasma nozzle of 1.5 mm, while moving the current collector at a speed of 20 m/min.

**Example 4: Dry Electrode Preparation**

A dry electrode was prepared in the same manner as in Example 1 except that the atmospheric-pressure plasma treatment was performed twice at an injection flow of inert gas ($N_2$) of 800 LPM, an injection flow of dried oxygen-containing gas of 2 LPM, a voltage of 14 kV, a power of 3.9 kW, and a distance between the current collector and the plasma nozzle of 1.5 mm, while moving the current collector at a speed of 20 m/min.

**Comparative Example 1: Dry Electrode Preparation**

A dry electrode was prepared in the same manner as in Example 1 except that the atmospheric-pressure plasma treatment was not performed.

**Comparative Example 2: Dry Electrode Preparation**

A dry electrode was prepared in the same manner as in Example 1 except that the atmospheric-pressure plasma treatment was performed while moving the current collector at a speed of 200 m/min.

Preparation methods of the dry electrodes prepared according to Examples 1 to 4 and Comparative Examples 1 and 2 are summarized and presented in [Table 1] below.

[Table 1]

| | Atmospheric-pressure plasma treatment conditions | | | | | | |
|---|---|---|---|---|---|---|---|
| | Inert gas flow (L/min) | Dried oxygen - contai ning gas flow (L/min ) | Voltage (kV) | Power (kW) | Distance between the current collect or and the plasma nozzle (mm) | Current collect or movement speed (m/min) | Number of times perform ed |
| Example 1 | 800 | 2 | 14 | 3.9 | 1.5 | 40 | 1 |
| Example 2 | 800 | 2 | 14 | 3.9 | 1.5 | 40 | 2 |
| Example 3 | 800 | 2 | 14 | 3.9 | 1.5 | 20 | 1 |
| Example 4 | 800 | 2 | 14 | 3.9 | 1.5 | 20 | 2 |
| Comparative Example 1 | - | - | - | - | - | - | 0 |
| Comparative Example 2 | 800 | 2 | 14 | 3.9 | 1.5 | 200 | 1 |

**Experimental Example 1: ToF-SIMS and SEM-EDX Analysis**

1) ToF-SIMS Analysis

ToF-SIMS analysis was performed on each of the current collectors prepared in Examples 1 to 4 and Comparative Examples 1 and 2 to analyze organic components remaining on a surface of the current collector.

Specifically, the current collectors prepared in Examples 1 to 4 and Comparative Examples 1 and 2 were punched into a size of 50 mmx50 mm, and then analyzed under the following conditions using TOF-SIMS 5 by Ion-TOF GmbH.

1) Positive mode
2) Measurement mass range: 1u to 873u
3) Primary ion: $Bi_3$,
4) Primary ion dose: $3.81 \times 10^8$ ions/cm$^2$
5) Voltage: 30 KeV
6) Detection time: 100 seconds
7) FOV (field of view): 100 $\mu$m$\times$100 $\mu$m

Measured $C_2H_3O^+$ peak intensity and $C_3H_7^+$ peak intensity and measured sum of total ions are presented in Table 2 below.

2) SEM-EDX Measurement

A ratio of a carbon content at an interface of the current collector to a carbon content in the electrode material mixture film was measured for the dry electrodes prepared in Examples 1 to 4 and Comparative Examples 1 and 2 by scanning electron microscope-energy dispersive X-ray spectroscopy.

1) Instrument: JSM-IT800 (JEOL Ltd.)

2) Accelerating voltage: 5 kV

3) Incident current: 2.3 nA, High current mode

4) Working distance: 10 mm

5) Total count during mapping: 35,000 cps

The measured results are presented in Table 2 below.

[Table 2]

| | | ToF-SIMS | | | | | SEM-EDX |
|---|---|---|---|---|---|---|---|
| | $C_2H_3O^+$ peak intens ity ($I_A$, counts ) | $C_3H_7^+$ peak intens ity ($I_B$, counts ) | Measured total ion counts ($I_T$, counts) | $I_B/I_A$ | $I_B/I_T$ ($\times 10^{-5}$) | $I_A/I_T$ ($\times 10^{-5}$) | Ratio of carbon content at the interface of the current collector to carbon content in the electrode material mixture film |
| Example 1 | 130165 | 33495 | 42150481 | 0.2573 | 79 | 309 | 0.78 |
| Example 2 | 115211 | 33000 | 43447251 | 0.2864 | 76 | 265 | 0.78 |
| Example 3 | 105003 | 32500 | 41748504 | 0.3095 | 78 | 252 | 0.78 |
| Example 4 | 74095 | 32500 | 40307113 | 0.4386 | 81 | 184 | 0.78 |
| Comparative Example 1 | 52017 | 86001 | 36655097 | 1.653 | 235 | 142 | 0.78 |
| Comparative Example 2 | 58135 | 78068 | 36856219 | 1.3429 | 212 | 158 | 0.78 |

**Experimental Example 2: Electrode Layer Resistance and Interfacial Resistance Measurement**

1) Electrode Layer Resistance (Qcm)

After each of the dry electrodes prepared in Examples 1 to 4 and Comparative Examples 1 and 2 was cut into a size of 50 mm x 50 mm to make five samples, a current of 100 $\mu$A was applied to the electrode using a multiprobe (MP) resistance measurement method, and a resistance value of a surface of the electrode material mixture film was measured by a potential difference measured between 46 probes.

An average of the measured resistance values was listed in Table 3 below.

2) Interfacial Resistance ($\Omega$cm)

After each of the dry electrodes prepared in Examples 1 to 4 and Comparative Examples 1 and 2 was cut into a size of 50 mm x 50 mm to make five samples, a current of 100 $\mu$A was applied to the electrode using the MP resistance measurement method, and a resistance value between the electrode material mixture film and the current collector was measured by a potential difference measured between 46 probes.

An average of the measured resistance values was listed in Table 3 below.

**Experimental Example 3: Electrode Material Mixture Film Adhesion Evaluation and Electrode Appearance Evaluation**

(Electrode Material Mixture Film Adhesion Evaluation)

90° peel strength of the current collector and the electrode material mixture film was measured for the dry electrodes prepared in Examples 1 to 4 and Comparative Examples 1 and 2.

Specifically, the dry electrodes prepared in Examples 1 to 4 and Comparative Examples 1 and 2 were immersed in an electrolyte solution, sealed, stored in an oven at 70°C for 4 weeks, taken out from the oven, rinsed with dimethyl carbonate (DMC), and then cut to a width of 20 mm. Thereafter, adhesion was evaluated by measuring an average value of 90° peel strengths at a displacement of 20 mm to 80 mm by a method of peeling the electrode material mixture film from the current collector using a universal testing machine (UTM).

Measurement results are presented in Table 3 below.

(Electrode Appearance Evaluation)

The dry electrodes prepared in Examples 1 to 4 and Comparative Examples 1 and 2 were immersed in the electrolyte solution, sealed, and then stored in an oven at 70°C for 4 weeks.
Thereafter, the stored dry electrodes were taken out from the oven and rinsed, and appearance evaluation was then performed.
Specifically, with respect to the appearance evaluation, if there was a peeling-off of the electrode material mixture film in the dry electrode rinsed with dimethyl carbonate (DMC), it was evaluated as X, and if there was no peeling-off, it was evaluated as o.
Evaluation results are presented in Table 3 below.

[Table 3]

| | Electrode layer resistance and interfacial resistance measurement | | Electrode material mixture film adhesion evaluation (gf/20mm) | Electrode appearance evaluation |
| --- | --- | --- | --- | --- |
| | Electrode layer resistance ($\Omega \times$cm) | Interfacial resistance ($\Omega \times$cm$^2$) | | |
| Example 1 | 37.91 | 0.738 | 99.5 | ○ |
| Example 2 | 38.44 | 0.742 | 102.3 | ○ |
| Example 3 | 36.91 | 0.694 | 101.6 | ○ |
| Example 4 | 37.69 | 0.658 | 103.7 | ○ |
| Comparative Example 1 | 39.01 | 2.745 | 15.1 | X |
| Comparative Example 2 | 38.16 | 2.461 | 20.6 | X |

Referring to Table 3, with respect to Examples 1 to 4, it may be confirmed that, unlike Comparative Examples 1 and 2, resistance characteristics were excellent, adhesion of the electrode material mixture film was excellent, and there was no peeling-off in the appearance of the electrode.

**Claims**

1. A dry electrode comprising:

   a current collector; and an electrode material mixture film disposed on the current collector,
   wherein the electrode material mixture film comprises an electrode active material and a fibrillizable binder,
   wherein a ratio ($I_B/I_A$) of a $C_3H_7^+$ peak intensity ($I_B$) to a $C_2H_3O^+$ peak intensity ($I_A$), which is measured on a surface of the current collector by Time-of-Flight secondary ion mass spectrometry (ToF-SIMS), is 1.3 or less, and
   a ratio of a carbon content at an interface of the current collector to a carbon content in the electrode material mixture film, which is measured by scanning electron microscope-energy dispersive X-ray spectroscopy, is 1.03 or less.

2. The dry electrode of claim 1, wherein a ratio ($I_B/I_T$ of the $C_3H_7^+$ peak intensity ($I_B$) to total ion counts ($I_T$), which is measured on the surface of the current collector by Time-of-Flight secondary ion mass spectrometry (ToF-SIMS), is $230 \times 10^{-5}$ or less.

3. The dry electrode of claim 1, wherein a ratio ($I_A/I_T$5. of the $C_2H_3O^+$ peak intensity ($I_A$) to total ion counts ($I_T$), which is measured on the surface of the current collector by Time-of-Flight secondary ion mass spectrometry (ToF-SIMS), is $1,000 \times 10^{-5}$ or less.

4. The dry electrode of claim 1, wherein the current collector comprises aluminum.

5. The dry electrode of claim 1, wherein tensile strength of the current collector is 5 kgf/mm$^2$ or more.

6. The dry electrode of claim 1, wherein a water contact angle of the surface of the current collector is in a range of 10° to 100°.

7. The dry electrode of claim 1, wherein the surface of the current collector comprises rolling oil.

8. A method of preparing a dry electrode, the method comprising:

   performing an atmospheric-pressure plasma treatment on a surface of a current collector,
   wherein loading speed of the current collector in the atmospheric-pressure plasma treatment is in a range of 1 m/min to 100 m/min.

9. The method of claim 8, wherein, in the atmospheric-pressure plasma treatment, an injection flow of inert gas is in a range of 500 L/min to 1,000 L/min, and an injection flow of oxygen-containing gas is in a range of 0.1 L/min to 10 L/min.

10. The method of claim 8, wherein a ratio of an injection flow of inert gas to an injection flow of oxygen-containing gas in the atmospheric-pressure plasma treatment is in a range of 50 to 10,000.

11. The method of claim 8, wherein voltage of the atmospheric-pressure plasma treatment is in a range of 10 kV to 20 kV.

12. The method of claim 8, wherein power of the atmospheric-pressure plasma treatment is in a range of 3 kW to 5 kW.

13. The method of claim 8, wherein the atmospheric-pressure plasma treatment is performed in a state in which the current collector and a plasma nozzle are spaced apart from each other by 0.01 mm to 3.00 mm.

14. A lithium secondary battery comprising the dry electrode of claim 1.

[FIG. 1]

## INTERNATIONAL SEARCH REPORT

| International application No. |
|---|
| **PCT/KR2024/020897** |

### A. CLASSIFICATION OF SUBJECT MATTER

**H01M 4/13**(2010.01)i; **H01M 4/66**(2006.01)i; **H01M 10/052**(2010.01)i; **H01M 4/139**(2010.01)i

According to International Patent Classification (IPC) or to both national classification and IPC

### B. FIELDS SEARCHED

Minimum documentation searched (classification system followed by classification symbols)

H01M 4/13(2010.01); H01G 9/058(2006.01); H01M 10/052(2010.01); H01M 2/02(2006.01); H01M 4/02(2006.01); H01M 4/04(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 건식 (dry method), 집전체 (current collector), 섬유화 (fibrillation), 플라즈마 (plasma), 비행시간형 이차이온질량분석 (Time-of Flight secondary ion mass spectrometry, ToF-SIMS), 주사전자현미경-에너지분산형 엑스선 분광기 (Scanning Electron Microscope-Energy Dispersive X-ray Spectroscopy), 압연유 (rolling oil), 탄소 함량 (carbon content), 속도 (speed)

### C. DOCUMENTS CONSIDERED TO BE RELEVANT

| Category* | Citation of document, with indication, where appropriate, of the relevant passages | Relevant to claim No. |
|---|---|---|
| Y | CN 117199370 A (ZHONGNENG RUIXIN (SHENZHEN) ENERGY TECHNOLOGY CO., LTD.) 08 December 2023 (2023-12-08)<br>See claims 6-8 and 10; and paragraphs [0039], [0049], [0059], [0071] and [0149]. | 1-14 |
| Y | JP 2010-086729 A (TOYOTA MOTOR CORP.) 15 April 2010 (2010-04-15)<br>See claim 1; and paragraphs [0013] and [0019]-[0027]. | 1-7,14 |
| Y | KR 10-2022-0109832 A (LG CHEM, LTD.) 05 August 2022 (2022-08-05)<br>See claims 1-5 and 7; and paragraphs [0077], [0079]-[0081], [0088], [0089] and [0092]. | 8-13 |
| Y | KR 10-2023-0020196 A (LG ENERGY SOLUTION, LTD.) 10 February 2023 (2023-02-10)<br>See claims 1-6; and paragraphs [0036] and [0041]. | 13 |

✓ Further documents are listed in the continuation of Box C.    ✓ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 769 510 A1

**INTERNATIONAL SEARCH REPORT**

| International application No. |
| --- |
| **PCT/KR2024/020897** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0142625 A (BTL ADVANCED MATERIAL CO., LTD.) 28 December 2017 (2017-12-28) See abstract; claims 1-4; and paragraphs [0033]-[0036]. | 1-14 |

**INTERNATIONAL SEARCH REPORT**
**Information on patent family members**

International application No.

**PCT/KR2024/020897**

| Patent document cited in search report | | | Publication date (day/month/year) | Patent family member(s) | | | Publication date (day/month/year) |
|---|---|---|---|---|---|---|---|
| CN | 117199370 | A | 08 December 2023 | CN | 117199370 | B | 31 December 2024 |
| JP | 2010-086729 | A | 15 April 2010 | | None | | |
| KR | 10-2022-0109832 | A | 05 August 2022 | CN | 116686120 | A | 01 September 2023 |
| | | | | EP | 4287287 | A1 | 06 December 2023 |
| | | | | KR | 10-2022-0109830 | A | 05 August 2022 |
| | | | | US | 2024-0304817 | A1 | 12 September 2024 |
| | | | | WO | 2022-164287 | A1 | 04 August 2022 |
| KR | 10-2023-0020196 | A | 10 February 2023 | | None | | |
| KR | 10-2017-0142625 | A | 28 December 2017 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230189907
- KR 1020230189908